Europäisches Patentamt

European Patent Office

Office européen des brevets

(11) Veröffentlichungsnummer: **0 246 409**
**A1**

(12) **EUROPÄISCHE PATENTANMELDUNG**

(21) Anmeldenummer: **87103658.8**

(51) Int. Cl.⁴: **A01C 23/02**

(22) Anmeldetag: **13.03.87**

(30) Priorität: **17.05.86 DE 3616834**
            **23.12.86 DE 3644078**

(43) Veröffentlichungstag der Anmeldung:
    **25.11.87 Patentblatt 87/48**

(84) Benannte Vertragsstaaten:
    **AT BE CH ES FR GB GR IT LI LU NL SE**

(71) Anmelder: **Stockreiter, Helmut**
    **Strothmannsweg 88**
    **D-4500 Osnabrück(DE)**

(72) Erfinder: **Stockreiter, Helmut**
    **Strothmannsweg 88**
    **D-4500 Osnabrück(DE)**

(74) Vertreter: **Busse & Busse Patentanwälte**
    **Postfach 1226 Grosshandelsring 6**
    **D-4500 Osnabrück(DE)**

(54) **Vorrichtung zur Bodenbearbeitung.**

(57) Die Erfindung bezieht sich auf eine Vorrichtung zur Bodenbearbeitung mit einem Druckerzeuger 3 zur Lieferung von Druckluft oder dgl. unter Druck stehenden Medien und mit einem Vorratsbehälter 2 für flüssige Bodenverbesserungsmittel. Der Druckerzeuger 3 und der Vorratsbehälter 2 sind zum Einbringen der Druckluft bzw. des Bodenverbesserungsmittels in das Erdreich mit einem vorzugsweise lanzenförmig gestalteten Bodenbearbeitungswerkzeug 7 verbindbar. Um mit baulich einfachen, weitgehend verschleißfrei arbeitenden Mitteln eine intensive Vermischung des in den Vorratsbehälter eingefüllten Mediums erreichen zu können, ist im Vorratsbehälter 2 eine Blasöffnungen 11 aufweisende, an den Druckerzeuger anschließbare Druckleitung 12 vorgesehen (Fig. 2).

Fig. 2

EP 0 246 409 A1

## Vorrichtung zur Bodenbearbeitung

Die Erfindung bezieht sich auf eine Vorrichtung zur Bodenbearbeitung, insbesondere zur Bodenbelüftung und/oder zum Einbringen eines Bodenverbesserungsmittels in das Erdreich, in einer Ausbildung nach dem Oberbegriff des Anspruchs 1.

Bei einer aus der DE-OS 15 82 053 bekannten Bodenbearbeitungsvorrichtung zum Einbringen von flüssigem Bodenverbesserungsmittel in das Erdreich ist der Vorratsbehälter an einen Kompressor anzuschließen und mit Druckluft zu beaufschlagen. Die Druckluftleitung des Vorratsbehälters mündet in der Behälterabdeckplatte, so daß oberhalb des jeweiligen Flüssigkeitsspiegels ein Druckluftpolster vorhanden ist. Eine Durchmischung bzw. Verwirbelung des eingefüllten Bodenverbesserungsmittels kann hier nicht erfolgen. Zu Reinigungszwecken sind die Bodenbearbeitungswerkzeuge mit Druckluft zu beaufschlagen, wobei allerdings dann der Vorratsbehälter über eine Zweigleitung umgangen ist.

Aus der DE-OS 26 53 023 ist ein Injektionsgerät zum Einbringen von flüssigem Bodenverbesserungsmittel in das Erdreich offenbart, bei dem ebenfalls mittels eines Kompressors der Vorratsbehälter mit Druck zu beaufschlagen und dadurch das flüssige Bodenverbesserungsmittel unter Druck auszubringen ist. Eine Druckluftversorgung des Bodenbearbeitungswerkzeuges und eine Durchmischung der in den Vorratsbehälter eingefüllten Flüssigkeit kann hier nicht erfolgen. Gleiches gilt auch für das aus dem DE-GM 84 37 513 bekannte Injektionsgerät zum Einbringen von flüssigem Bodenverbesserungsmittel in das Erdreich.

Es ist Aufgabe der vorliegenden Erfindung, mit baulich einfachen Mitteln eine kostengünstig herstellbare, verschleißunanfällige Vorrichtung zur Bodenbearbeitung zu schaffen, mit der das Erdreich wirksam aufzulockern und mit einem im Vorratsbehälter in kostengünstiger und verschleißunanfälliger Weise wirksam durchmischbaren Bodenverbesserungsmittel zu versehen ist. Diese Aufgabe wird bei einer Vorrichtung zur Bodenbearbeitung der eingangs genannten Art durch die im kennzeichnenden Teil des Anspruchs 1 angegebenen Merkmale gelöst.

Durch das Einblasen von Druckluft wird das in den Behälter eingefüllte Bodenverbesserungsmittel intensiv verwirbelt und vermischt, so daß auf ein verschleißanfälliges mechanisches Rührwerk verzichtet werden kann. Darüber hinaus ist auf äußerst einfache Weise in dem Behälterinneren ein Überdruck aufzubauen, so daß das eingefüllte Bodenverbesserungsmittel wirksam unter Druck in das Erdreich einzubringen ist. Durch die Mündungsstelle der Druckluftversorgungsleitung des Bodenbearbeitungswerkzeuges in einem außerhalb des maximalen Flüssigkeitsfüllstandes gelegenen Bereich ist das Bodenbearbeitungswerkzeug über den Vorratsbehälter auch separat mit Druckluft zu versorgen, wobei mittels der die Blasöffnungen aufweisenden Druckluftzuführungsleitung der Druckabbau im Behälter kontinuierlich durch die Druckluftzufuhr über die Blasöffnungen mit sich dabei einstellender Durchmischung des eingefüllten Fluids ausgeglichen wird.

Der Aufbau der Vorrichtung nach der Erfindung ist somit außerordentlich einfach und erfordert lediglich trotz der fortlaufend stattfindenden Verwirbelung und Durchmischung des eingefüllten Bodenverbesserungsmittels nur beispielsweise einen Kompressor als Energie beanspruchende Zusatzeinrichtung. Die Bodenverarbeitungseinrichtung nach der Erfindung ist damit ein kostengünstig herstellbares, annähernd verschleißfrei arbeitendes Gerät, das an dem jeweils gewünschten Einsatzort sowohl zur Auflockerung des Bodens mittels Druckluft als auch zum Einbringen von unter Druck stehenden Bodenverbesserungsmitteln zum Einsatz kommen kann.

Aus der AT-PS 376 543, der CH-PS 639 240 und dem DE-GM 19 26 482 sind zwar Güllebehältnisse bekannt, bei denen mittels einer Druckluftleitung Druckluft in einen geschlossenen, befüllbaren Behälter eingebracht werden kann. Hier wird jedoch der Vorratsbehälter zwecks Ausbringung der Gülle einmalig mit Überdruck beaufschlagt, der dann kontinuierlich bei Ablassen der Flüssigkeit abgebaut wird. Beim Einbringen des Überdrucks wird zwar die eingefüllte Flüssigkeit verwirbelt, jedoch ist eine fortlaufende Durchmischung und Verwirbelung der Gülle nicht möglich.

Hinsichtlich weiterer vorteilhafter Ausgestaltungen der Erfindung wird auf Unteransprüche, die Zeichnung und die nachfolgende Beschreibung verwiesen. In der Zeichnung zeigen:

Fig. 1 in einer Übersichtsdarstellung am Einsatzort ein Ausführungsbeispiel der Vorrichtung mit einem auf einem Fahrzeug montierten Vorratsbehälter;

Fig. 2 in schematischer, teilweise geschnittener Seitenansicht den Vorratsbehälter des Ausführungsbeispiels nach Fig. 1;

Fig. 3 den in Fig. 2 gezeigten Vorratsbehälter in rückwärtiger Ansicht;

Fig. 4 in einer schematischen, teilweise geschnittenen Seitenansicht ein bevorzugtes Ausführungsbeispiel des Bodenbearbeitungswerkzeuges für eine Vorrichtung nach der Erfindung;

Fig. 5 vergrößert den oberen, den Sammelmischraum aufweisenden Bereich des in Fig. 3 veranschaulichten Bodenbearbeitungswerkzeuges.

In der Zeichnung sind nur die zum unmittelbaren Verständnis der Erfindung notwendigen Elemente der Vorrichtung zur Bodenbearbeitung dargestellt sowie grundsätzlich gleiche Teile mit gleichen Bezugsziffern versehen. Die in dem dargestellten Ausführungsbeispiel gezeigte Vorrichtung dient dazu, beispielsweise durch unsachgemäße Bodenbearbeitung oder schwere Baumaschinen stark verdichtete, wasserundurchlässige Böden im Wurzelbereich von Bäumen, von Rasen-oder Vegetationsflächen und dgl. durch gezielte Lanzierung zunächst aufzulockern und in den entstandenen Auflockerungsräumen flüssige Bodenverbesserungs-und Düngemittel einzubringen.

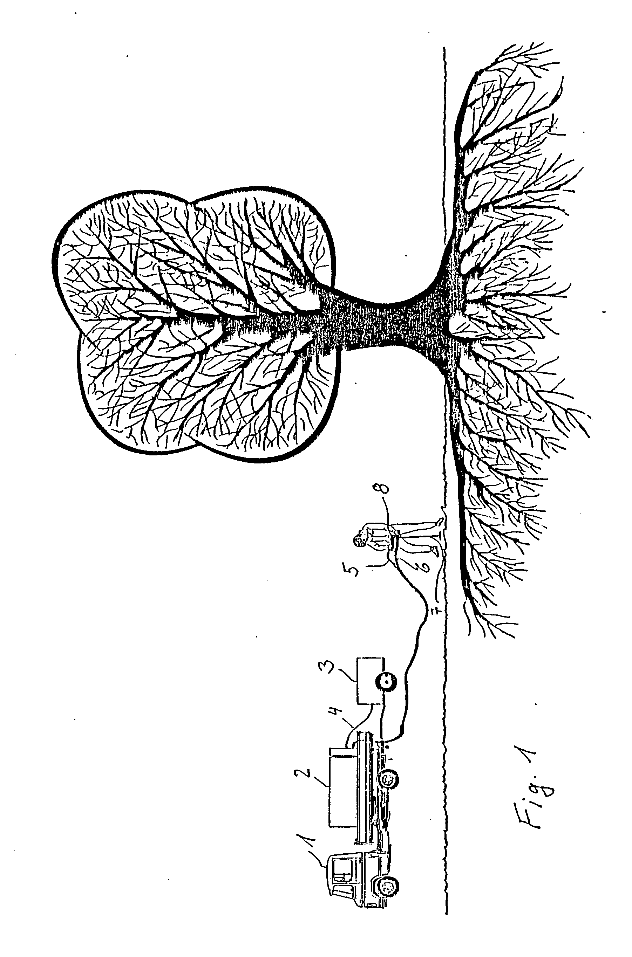

Das in Fig. 1 gezeigte Ausführungsbeispiels weist einen auf einem Lastkraftwagen 1 montierten Vorratsbe hälter 2 auf. An eine Anhängerkupplung des Lastkraftwagens ist ein Kompressor 3 als Druckerzeuger angehängt. Der Kompressor 3 erzeugt Druckluft, die über einen flexiblen Druckschlauch 4 dem Vorratsbehälter 2 zugeführt wird. In den Vorratsbehälter 2 ist ein flüssiges Bodenverbesserungs-bzw. Regenerationsmittel eingefüllt. Über flexible Druckleitungen 5 und 6 werden das Bodenverbesserungsmittel und die Druckluft dem lanzenförmig gestalteten Bodenbearbeitungswerkzeug 7 zugeführt. Dieses Bodenbearbeitungswerkzeug besitzt in Fig. 2 im einzelnen nicht näher dargestellte Austrittsöffnungen im Bereich seines unteren Spitzendes. Über ein an dem Bodenbearbeitungswerkzeug 7 vorgesehenes Mischventil 8 können die Druckluft-und Bodenverbesserungsmittelzufuhr gesteuert werden.

In der in Fig. 1 gezeigten Betriebsstellung ist die feinfühlige Bodenbearbeitungslanze 7 in den Boden des Wurzelwerkes eines Baumes eingeführt. Nach Freigabe der Druckluft wird zunächst der Boden durch eine gezielte Lanzierung z.B. kreisförmig mit einem Durchmesser von ca. 1 bis 2 m aufgelockert. Danach wird nach Freigabe der Bodenverbesserungsmittelzufuhr in die geschaffenen Auflockerungskanäle das Bodenverbesserungsmittel eingebracht. Beim Vordringen des Bodenbearbeitungswerkzeuges 7 in tiefere Bodenbereiche werden beim Einsatz des gezeigten Ausführungsbeispiels ca. in Abständen von 15 bis 20 cm die Bodenhorizonte durch schlagartig zugeführte Druckluft aufgebrochen, so daß eine Verbindung zu darunterliegenden Bodenhorizonten entsteht. Um das entstandene aufgelockerte Bodengefüge über mehrere Bodenhorizonte nachhaltig zu erhalten und von Mikroorganismen ausbauen lassen zu können, werden die jeweiligen Bodenhorizonte mit unter Druck stehenden Regenerationsmitteln verbaut.

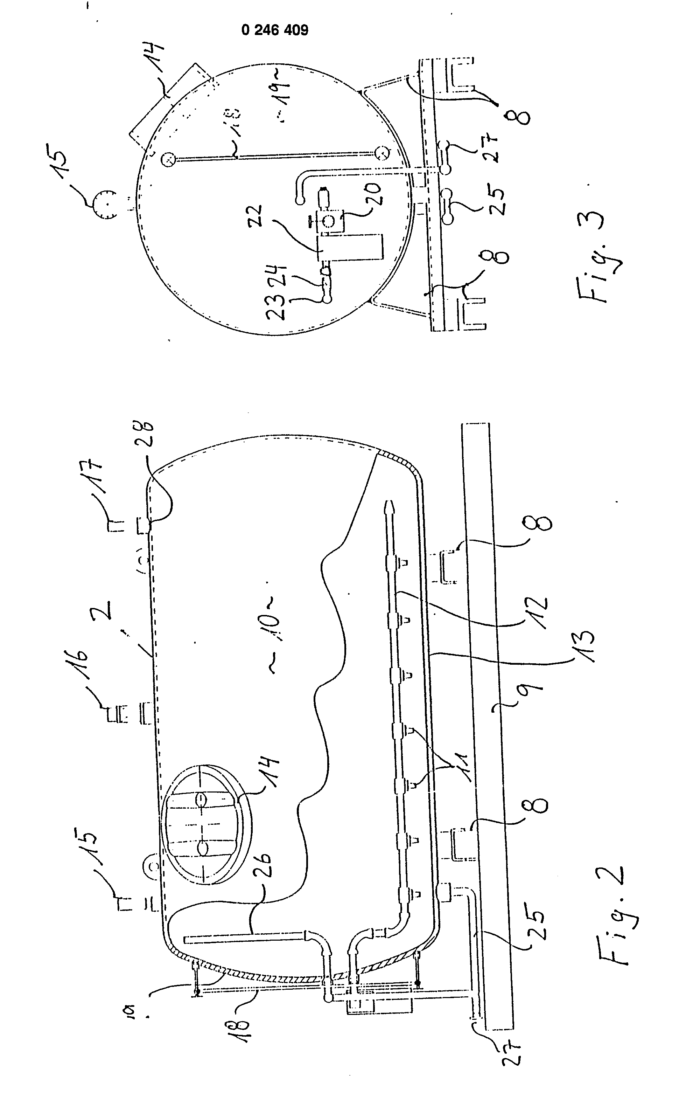

Wie im einzelnen aus den Darstellungen nach den Fig. 2 und 3 hervorgeht, ist der Vorratsbehälter 2 über Fußstützen 8 auf der Ladeplattform 9 des in Fig. 1 gezeigten Lastkraftwagens 1 befestigt. Der Vorratsbehälter 2 ist als druckdicht verschließbarer Druckbehälter aus z.B. Kunststoff ausgebildet, in dessen Innerem 10 eine an den Kompressor 3 angeschlossene, Blasöffnungen 11 aufweisende Druckleitung 12 vorgesehen ist. Die Druckleitung 12 verläuft innerhalb des Vorratsbehälters 2 entlang des Behälterbodens 13, wobei die Blasöffnungen 11 zum Behälterboden 13 hin des insgesamt zylindrischen Vorratsbehälters 2 ausgerichtet sind. Auf seiner Mantelfläche ist der Vorratsbehälter mit einem Verschlußdeckel 14, einem Manometer 15, einer Einfüllöffnung 16 sowie einem manuell betätigbaren Sicherheitsventil 17, das auch als Druckregelventil ausgebildet sein kann, versehen. An der rückwärtigen Stirnseite 19 des Vorratsbehälters 2 ist eine Flüssigkeitsstandanzeige 18 befestigt. An die Druckleitung 12 sind ein Druckminderer 20 mit einem Handrad 21 und eine Ölabscheidevorrichtung 22 angeschlossen, so daß über die bei 23 anschließbare flexible Druckleitung 4 des Kompressors 3 ölgereinigte Druckluft mit einem vorbestimmten Druck über die Blasöffnungen in den Vorratsbehälter 2 zuzuführen ist, wobei zwischen dem Druckluftanschluß 23 und dem Ölscheider 22 noch ein Absperrventil 24 vorgesehen ist. Das flüssige Bodenverbesserungsmittel kann über eine Austrittsleitung 25 und die daran anschließbare flexible Druckleitung 5 zum Bodenbearbeitungswerkzeug 7 gelangen. Im Vorratsbehälterinneren 10 mündet in einem außerhalb des maximalen Füllstandes gelegenen Bereich eine Druckluftversorgungsleitung 26, an deren Behälteraustrittsanschluß 27 der flexible Druckluftversorgungsschlauch 6 des Bodenbearbeitungswerkzeuges 7 anschließbar ist.

Bei Inbetriebnahme der Vorrichtung wird Wasser sowie ein Bodenverbesserungs-bzw. Düngemittel in den Vorratsbehälter 2 eingefüllt. Die von dem Sicherheitsventil 17 verschließbare Druckentlastungsbohrung 28 ist geöffnet. Nach Inbetriebsetzen des Kompressors 3 wird dem Behälterinneren 10 über den Druckschlauch 4 und die Blasöffnungen 13 der Druckleitung 12 ölgereinigte Druckluft zugeführt. Durch die zum Behälterboden hin ausgerichteten Blasöffnungen 11 wird die Druckluft gegen den Behälterboden 13 gepreßt, von dem sie entlang der Behälterinnenwandungen unter intensiver Vermischung der eingefüllten Flüssigkeit abströmt. Nach Schließen des Sicherheits-bzw. Druckventils 17 baut sich bei weiterer Druckluftzufuhr unter Fortführung der Mischvorgänge im Behälterinneren 10 ein Überdruck mit einem Luftpolster oberhalb des Flüssigkeitsspiegels auf, so daß die Druckluft durch die Druckluftversorgungsleitung 26 ohne das Erfordernis zusätzlicher Kompressoranschlüsse zur Druckluftversorgung des Bodenbearbeitungswerkzeuges 7 kontinuierlich aus dem Vorratsbehälter entnommen werden kann, da die Minderung des Behälterinnendrucks bei Entnahme der Druckluft bzw. des Bodenverbesserungsmittels durch den Kompressor bzw. die zugeführte ölgereinigte Druckluft unter Fortführung des Mischvorgangs ausgeglichen wird. Das flüssige Bodenverbesserungsmittel kann ohne zusätzliche mechanische Pumpelemente unter Druck über die Austrittsleitung 25 zu den zugehörigen Austrittsöffnungen des Bodenbearbeitungswerkzeuges 7 gelangen und von dort in das Erdreich eingebracht werden. Insgesamt sind somit die verschleißanfälligen Bauteile der Vorrichtung zur Bodenbearbeitung auf ein Minimum reduziert, so daß das Gerät ohne zusätzliche energiebeanspruchende Teile mit einem einfachen, z.B. verbrennungsmotorisch betriebenen Kompressor, an jedem gewünschten Einsatzort zum Einsatz kommen kann.

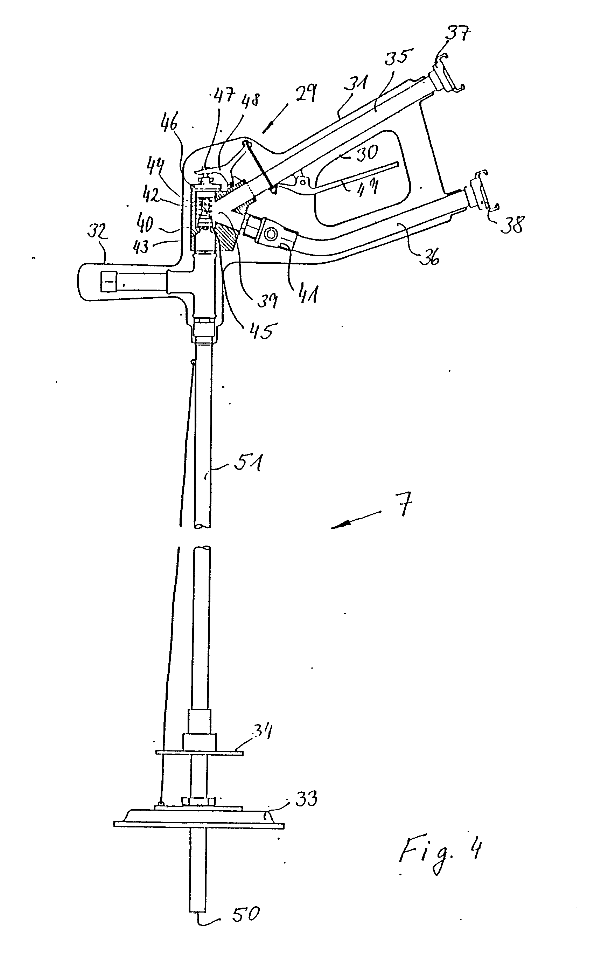

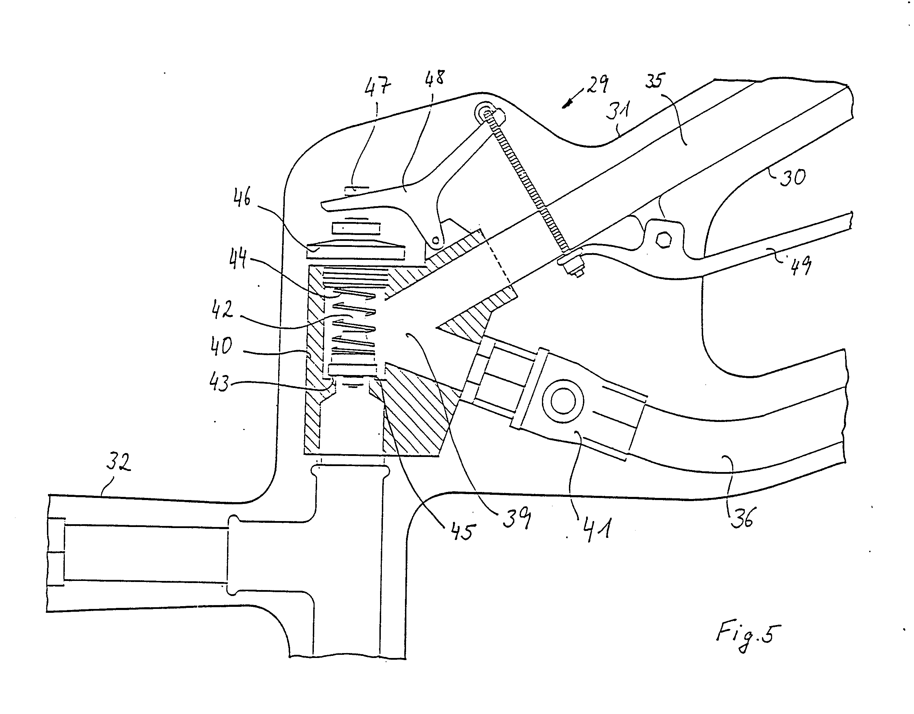

Wie im einzelnen näher die Fig 4 und 5 veranschaulichen, ist das Bodenbearbeitungswerkzeug 7 ein insgesamt leichtgewichtiges, verschleißunanfälliges und kostengünstig herstellbares Bauteil, das ein lanzenförmiges, in das Erdreich einzubringendes Zuführungsrohr 51 und ein Kopfstück 29 mit einem einen Handgriff 30 aufweisenden Stutzen 31 sowie mit einem Festhaltegriff 32 hat. An dem Zuführungsrohr 51 sind Schutzschirme 33 und 34 beweglich geführt. In dem Kopfstück 29 bzw. dem Stutzen 31 sind eine Druckluftanschlußleitung 35 sowie eine Flüssigkeitsanschlußleitung 36 ausgebildet, die über Schnellverschlüsse 37 bzw. 38 mit den flexiblen Druckleitungen 4 und 5 zu verbinden sind. Die Druckluftanschlußleitung 35 und die Flüssigkeitsanschlußleitung 36 münden in einen Sammelmischraum 39, der in einem mit den Anschlußleitungen 35 und 36 verschraubten Mischteil 40 ausgebildet ist. Die Flüssigkeitsanschlußleitung 36 ist mit einem durch einen Absperrhahn 41 gebildeten Absperrorgan versehen, wohingegen die Druckluftanschlußleitung 35 ohne einen solchen Absperrhahn frei in den Sammelmischraum 39 mündet.

Innerhalb des Mischteils 40 ist ein Ventilkörper 42 geführt, der in seiner in den Fig. 4 und 5 veranschaulichten Schließstellung an dem in Mischteil 40 ausgebildeten Ventilsitz 43 anliegt. Der Ventilkörper 42 ist von einer Druckfeder 44 belastet, die sich einenends an einer eine Federabstützung ausbildenden Ventilkörpermantelringfläche 45 und anderenends an einem Gehäuseabstützteil 46 abstützt. Der Ventilkörper 42 erstreckt sich durch das Gehäuseabstützteil 46 hindurch und hat einen außerhalb des Mischteils 40 gelegenen Mitnehmeransatz 47, der von einem am Mischteil 40 angelenkten Stellhebel 48 untergriffen ist. Der Stellhebel 48 ist mit einem manuell betätigbaren Bedienhebel 49 gekoppelt. Der Ventilkörper 42 läßt sich durch die einfache Betätigung des Bedienhebels 49 entgegen der Kraft der Druckfeder 44 aus seiner Schließstellung in seine Offenstellung überführen, wodurch der Sammelmischraum 39 und die Druckluftanschlußleitung 35 mit der Austrittsöffnung 50 des Bodenbearbeitungswerkzeuges 7 verbindbar sind.

Zur Bodenbelüftung und -auflockerung wird das Bodenbearbeitungswerkzeug 7 auf die Bodenoberfläche aufgesetzt. Zunächst wird bei geschlossenem Absperrhahn 41 durch gegebenenfalls impulsartige Betätigung des Bedienhebels Druckluft der stirnseitig vorgesehenen Austrittsöffnung zugeführt und der Boden in oberen Horizonten aufgelockert. Dabei kann ohne das Erfordernis zusätzlicher Hammerwerke das Bodenbearbeitungswerkzeug 7 leicht und mühelos in tiefer gelegene Bodenbereiche gebracht werden. Trifft das Werkzeug auf Hindernisse, beispielsweise auf Wurzelwerk von Bäumen, ist dies von der Bedienperson sofort wahrzunehmen und das Werkzeug 7 an Stellen zu bringen, wo beim Eindringen des Werkzeuges 7 Hindernisse nicht vorhanden sind und somit Wurzelwerk nicht beschädigt werden kann. Sollen aufgelockerte Bodenhorizonte mit flüssigem Bodenverbesserungsmittel verbaut werden, ist der Absperrhahn 41 zu öffnen, so daß unter Druck durch die Flüssigkeitsanschlußleitung 36 das flüssige Bodenverbesserungsmittel in den Sammelmischraum 39 gelangen kann. Nach Betätigung des Bedienhebels 49 und dadurch bedingter Öffnung des Ventilkörpers 42 wird die Strömungsverbindung zu der Austrittsöffnung hergestellt, wobei zwangsläufig auch die Druckluftanschlußleitung geöffnet ist, so daß das flüssige Bodenverbesserungsmittel durch die Druckluft vor Austritt aus dem Sammelmischraum 39 fein zerstäubt wird. Durch die spitzwinklige Anordnung der Druckluftanschlußleitung 35 und der Flüssigkeitsanschlußleitung in 36 ihren Mündungsbereichen zueinander ist die Zerstäubung der Flüssigkeit begünstigt.

Im dargestellten Ausführungsbeispiel ist die Austrittsöffnung 50 am stirnseitigen Ende des Zuführungsrohres 51 vorgesehen. Der bodenseitige Endbereich des Bodenbearbeitungswerkzeuges 7 kann im wesentlichen konisch zulaufend, stirnendseitig abgerundet ausgebildet sein, um Beschädigungen des Wurzelwerks vorzubeugen. Zweckmäßigerweise hat das Bodenbearbeitungswerkzeug 7 zum Ausbringen des flüssigen Bodenverbesserungsmittels auch im wesentlichen senkrecht zur Bodenbearbeitungswerkzeuglängsachse ausgerichtete Flüssigkeitsaustrittsöffnungen beispielsweise in Form von in einer Ebene vorgesehenen Kreuzbohrungen, wodurch sich vorteilhafte Druckverhältnisse beim Ausbringen des Flüssigkeitsnebels einstellen lassen. Um wahlweise auch gezielt über bestimmte vorgesehene Austrittsöffnungen Druckluft oder flüssiges Bodenverbesserungsmittel ausbringen zu können, kann das Bodenbearbeitungswerkzeug 7 mit einer oder mehreren verschließbaren Austrittsöffnungen versehen sein.

## Ansprüche

1. Vorrichtung zur Bodenbearbeitung mit einem Druckerzeuger (3) zur Lieferung von Druckluft oder dgl. unter Druck stehenden Medien und einem Vorratsbehälter (2) für flüssige Bodenverbesserungsmittel, die zum Einbringen des Druckmediums bzw. des Bodenverbesserungsmittels in das Erdreich mit einem vorzugsweise lanzenförmig gestalteten Bodenbearbeitungswerkzeug (7) verbindbar sind, dadurch gekennzeichnet, daß im Vorratsbehälter (2) eine Blasöffnungen (11) aufweisende, an den Druckerzeuger (3) anschließbare Druckleitung (12) vorgesehen ist.

2. Vorrichtung zur Bodenbearbeitung nach Anspruch 1, dadurch gekennzeichnet, daß die Druckleitung (12) entlang des Vorratsbehälterbodens (13) verläuft und auf diesen ausgerichtete Blasöffnungen (11) hat.

3. Vorrichtung nach Anspruch 1 oder 2, dadurch gekennzeichnet, daß der Vorratsbehälter (2) als druckdicht verschließbarer Druckbehälter ausgebildet ist.

4. Vorrichtung nach Anspruch 3, dadurch gekennzeichnet, daß die Wandung des Vorratsbehälters (2) eine von einem Druckventil (17) beherrschbare Druck enlastungsöffnung (28) aufweist.

5. Vorrichtung nach einem der Ansprüche 1 bis 4, dadurch gekennzeichnet, daß zwischen dem Druckerzeuger (3) und den Blasöffnungen (11) der Druckleitung (17) ein Druckminderer (20) vorgesehen ist.

6. Vorrichtung nach einem der Ansprüche 1 bis 5, dadurch gekennzeichnet, daß die Druckluftversorgung des Bodenbearbeitungswerkzeugs (7) über den Vorratsbehälter (2) erfolgt.

7. Vorrichtung nach Anspruch 6, dadurch gekennzeichnet, daß im Vorratsbehälter (2) in einem außerhalb des maximalen Füllstandes gelegenen Bereich die Druckluftversorgungsleitung (26) des Bodenbearbeitungswerkzeugs (7) mündet.

8. Vorrichtung zur Bodenbearbeitung nach einem der Ansprüche 1 bis 7, dadurch gekennzeichnet, daß den Blasöffnungen (11) der Druckleitung (12) ein Abscheider (22) zur Aussonderung von insbesondere Ölverunreinigungen der Druckluft vorgeschaltet ist.

9. Vorrichtung zur Bodenbearbeitung insbesondere nach einem der Ansprüche 1 bis 8, dadurch gekennzeichnet, daß das Bodenbearbeitungswerkzeug (7) mit einem Sammelmischraum (39) versehen ist, in den eine Druckluftanschlußleitung (35) sowie eine mit einem Absperrorgan (41) versehene Flüssigkeitsanschlußleitung (36) münden, wobei der Sammelmischraum (39) sowie die Druckluftanschlußleitung (35) über einen mittels eines Stellgliedes betätigbaren, federbelasteten Ventilkörper (42) mit den Austrittsöffnungen (50) verbindbar sind.

10. Vorrichtung nach einem der Ansprüche 1 bis 9, dadurch gekennzeichnet, daß das Stellglied manuell betätigbar ist.

11. Vorrichtung nach einem der Ansprüche 1 bis 10, dadurch gekennzeichnet, daß das Stellglied einen am Ventilkörper (42) angreifenden Stellhebel (48) hat und der Ventilkörper (42) mittels des Stellhebels (48) entgegen der Ventilkörperfederkraft betätigbar ist.

12. Vorrichtung nach einem der Ansprüche 1 bis 11, dadurch gekennzeichnet, daß die Druckluftanschluß-und die Flüssigkeitsanschlußleitung (35,36) in spitzwinkliger Anordnung zueinander in den Sammelmischraum (39) münden.

13. Vorrichtung nach einem der Ansprüche 1 bis 12, dadurch gekennzeichnet, daß die Druckluftanschlußleitung (35) mit einem Rückschlagventil versehen ist.

14. Vorrichtung nach einem der Ansprüche 1 bis 13, dadurch gekennzeichnet, daß der Ventilkörper (42) mit einem eine Federabstützung ausbildenden, bei Druckbeaufschlagung eine Ventilkörperschließkraft bewirkenden Ventilkörpermantel ausgebildet ist.

15. Vorrichtung nach einem der Ansprüche 1 bis 15, dadurch gekennzeichnet, daß der bodenseitige Endbereich des Bodenbearbeitungswerkzeuges (7) im wesentlichen konisch zulaufend, stirnendseitig abgerundet ausgebildet ist.

16. Vorrichtung nach einem der Ansprüche 1 bis 15, dadurch gekennzeichnet, daß zum Ausbringen der Flüssigkeit im wesentlichen senkrecht zur Bodenbearbeitungswerkzeuglängsachse ausgerichtete Flüssigkeitsaustrittsöffnungen vorgesehen sind.

17. Vorrichtung nach einem der Ansprüche 1 bis 16, dadurch gekennzeichnet daß das bodenseitige Stirnende des Bodenbearbeitungswerkzeugs (7) eine Austrittsöffnung hat.

18. Vorrichtung nach einem der Ansprüche 1 bis 17, dadurch gekennzeichnet, daß eine oder mehrere Austrittsöffnungen verschließbar ausgebildet sind.

Fig. 1

0 246 409

Fig. 3

Fig. 2

Fig. 4

Fig.5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 429 647 (ZINCK) <br> * Spalte 6, Zeilen 47-68; Spalte 7; Abbildungen 1,2 * | 1 | A 01 C 23/02 |
| A | | 3,6,9, 10,15, 16 | |
| | --- | | |
| Y,D | DE-A-2 917 198 (KIRCHNER) <br> * Seiten 6-8; Abbildungen 1,2 * | 1 | |
| A | | 2,3,4, 6 | |
| | --- | | |
| A | DE-A-1 939 264 (JURDIC) <br> * Seiten 3,4,5; Abbildungen 1,2,3,4,5 * | 1,2,3 | |
| | --- | | RECHERCHIERTE SACHGEBIETE (Int. Cl.4) |
| P,X | DE-U-8 613 565 (STOCKREITER) <br> * Ansprüche 1-8 * | 1-8 | A 01 C <br> A 01 M |
| | --- | | |
| A,D | DE-A-1 582 053 (MOUREAU) <br> * Seiten 2,3,4 * | 1 | |
| | --- | | |
| A | US-A-3 783 804 (PLATZ) <br><br> * Spalte 3, Zeilen 24-68; Spalten 4,5,6; Abbildungen 1-7 * | 9,10, 12,15 | |
| | ----- | | |

Der vorliegende Recherchenbericht wurde für alle Patentansprüche erstellt.

| Recherchenort <br> DEN HAAG | Abschlußdatum der Recherche <br> 31-08-1987 | Prüfer <br> VERMANDER R.H. |
|---|---|---|